# EUROPEAN PATENT SPECIFICATION

(11) **EP 0 596 750 B1**
(45) Date of publication and mention of the grant of the patent: **04.09.1996**
(21) Application number: 93308867.6
(22) Date of filing: 05.11.1993
(51) Int. Cl.: B65F 5/00, B65G 53/26

(54) **Garbage suction/transfer unit**
Saugförderanlage für Abfall
Dispositif pour le transfert de déchets par aspiration

(30) Priority: 05.11.1992 JP 76276/92; 16.04.1993 JP 89986/93; 29.06.1993 JP 158946/93; 06.09.1993 JP 221423/93; 06.09.1993 JP 221424/93
(43) Date of publication of application: 11.05.1994
(73) Proprietor: SHINMAYWA INDUSTRIES, LTD., Nishinomiya-shi, Hyogo (JP)
(72) Inventor: Maruo, Shozo, c/o Special Purpose Truck Sales, Tsurumi-ku, Yokohama (JP); Okazaki, Akio, c/o Special Purpose Truck Sales, Tsurumi-ku, Yokohama (JP); Usui, Hitoshi, c/o Special Purpose Truck Sales, Tsurumi-ku, Yokohama (JP); Matsuo, Yasunori, c/o Special Purpose Truck Sales, Tsurumi-ku, Yokohama (JP)
(74) Representative: Brown, Kenneth Richard

(56) References cited:
- EP-A- 0 127 596
- EP-A- 0 297 145
- US-A- 4 900 200
- PATENT ABSTRACTS OF JAPAN vol. 17, no. 64 (M-1364)(5693) 8 February 1993 & JP-A-04 272 002 (SHIN MEIWA IND CO LTD) 28 February 1992
- HITACHI REVIEW vol. 39, no. 6 , December 1990 , TOKYO pages 387 - 392 XP000234643 INOUE & FUJITA 'Future urban refuse collection and transportation systems'

## Description

### BACKGROUND OF THE INVENTION

### Field of the Invention

The present invention relates to a garbage suction/transfer unit for sucking garbage which is stored in a garbage container installed in a multiple dwelling house or the like and transferring the same to a garbage truck comprising a vacuum suction unit and a suction pipe.

### Description of the Background Art

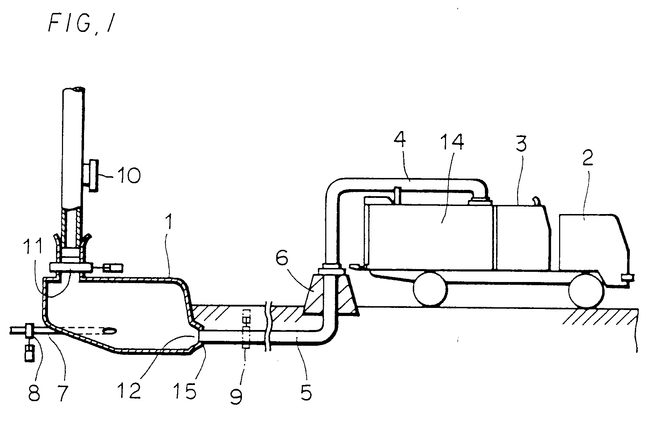

Japanese Patent Laying-Open No. 4-272002, which was laid open to the public on September 28, 1992, discloses a garbage suction/transfer unit according to the preamble of claim 1. Fig. 1 illustrates this garbage suction/transfer unit.

A garbage container 1 is installed in a multiple dwelling house or the like. The garbage container 1 has a garbage inlet 10 and a garbage outlet 12 on its upper and lower portions. A garbage transfer pipe 5 extending in the ground has an end which is connected to the garbage outlet 12 of the garbage container 1, and another end which is connected to a docking station 6.

A garbage truck 2 comprises a vacuum suction unit 3 and a suction pipe 4. A lower end of the suction pipe 4 is connected with the garbage transfer pipe 5 at the docking station 6.

In the state shown in Fig. 1, a closing gate 11 is in a closed position to seal the garbage container 1.

An air intake pipe 7 having a valve 8 is connected to the lower portion of the garbage container 1. Garbage in the garbage container 1 is transferred to the garbage truck 2 as follows.

First, the vacuum suction unit 3 of the garbage truck 2 is driven to negatively pressurize the garbage container 1 to a prescribed negative pressure value. Thereafter the valve 8 is opened to introduce air into the garbage container 1 through the air intake pipe 7. Garbage stored in the garbage container 1 is sucked and transferred with the as-introduced air to a garbage tank 14 which is provided in the garbage truck 2 through the garbage transfer pipe 5 and the suction pipe 4.

However, the aforementioned conventional garbage suction/transfer unit has the following problems:

As shown in Fig. 1, a connecting portion 15 of the garbage container 1 is converged toward the garbage outlet 12, in order to adapt the size of the garbage outlet 12 to the diameter of the garbage transfer pipe 5. When a large quantity of the garbage is gathered in the garbage outlet 12 to pass through the same at the same time, therefore, the garbage may clog the garbage outlet 12 to disable suction/transfer thereof. In this case, the garbage collector must release the garbage outlet 12 from such clogging of the garbage while temporarily stopping the sucking operation. This leads to deterioration of working efficiency, as well as a large burden on the garbage collector.

In the example shown in Figs. 1, a single garbage container 1 is connected to the garbage transfer pipe 5. On the other hand, a plurality of such garbage containers (not shown) may be connected to a single garbage transfer pipe 5. In this case, a discharge gate 9 is provided on the garbage transfer pipe 5 communicating with each garbage container 1. In order to suck/transfer garbage from such a plurality of garbage containers, the garbage containers are not simultaneously but successively subjected to sucking operations one by one. Therefore, only the discharge gate 9 corresponding to a garbage container requiring a sucking operation is opened.

When the garbage transfer pipe 5 is provided with the aforementioned discharge gate 9, projecting and depressing portions are formed in the vicinity of the discharge gate 9 to hinder an operation for transferring garbage.

Further, the conventional garbage suction/transfer unit may continuously carry out a sucking operation in vain after the garbage container is completely evacuated. Such a sucking operation is wasteful.

### SUMMARY OF THE INVENTION

According to the present invention, there is provided a garbage disposal unit in which there is provided a garbage container having an upper inlet through which garbage can fall into the container, a lower outlet through which garbage can be removed from the container by suction through a garbage transfer passageway, and an air inlet through which air can enter said container during such garbage removal, characterised in that at least a part of said air inlet is located in the vicinity of said outlet, and further characterised by means defining a bypass passageway having an opening into said container at a position above the level of said air inlet, and communicating with said garbage transfer passageway.

An advantage of the present invention is to provide a garbage container which can simply release a garbage outlet from clogging of garbage.

A garbage suction/transfer unit according to an embodiment of the present invention comprises a garbage container, a docking station, a garbage transfer pipe, an air intake pipe, and a bypass pipe. The garbage container has a garbage inlet and a garbage outlet on its upper and lower portions respectively. The docking station receives a suction pipe of a garbage truck. The garbage transfer pipe has an end which is connected to the garbage outlet of the garbage container, and another end which is connected to the suction pipe of the garbage end which is connected to the suction pipe of the garbage truck at the docking station. The air intake pipe is adapted to introduce air into the garbage container. The bypass pipe has an end which is connected to the upper portion of the garbage container and another end which is connected to the garbage transfer pipe, to form a bypass section passage.

Garbage which is introduced from the garbage inlet and stored in the garbage container is sucked and transferred to a garbage tank of the garbage truck in the following manner: First, a vacuum suction unit of the garbage truck is driven to negatively pressurize the garbage container. Thereafter air is introduced into the garbage container through the air intake pipe. The garbage stored in the garbage container is sucked and transferred with the as-introduced air to the garbage tank of the garbage truck through the garbage transfer pipe.

When a large quantity of garbage concentrates to the garbage outlet of the garbage container to block the same during the aforementioned sucking operation, the air which is introduced through the air intake pipe cannot pass through the garbage outlet. In this case, the air upwardly flows toward the bypass pipe, which connects the upper portion of the garbage container and the garbage transfer pipe. The garbage stored in the garbage container is upwardly sucked due to such an upward flow of the air. The part of the garbage clogging the garbage outlet is also upwardly sucked, and relieved from concentration at the garbage outlet. Consequently, the garbage outlet is so opened that the garbage is again sucked and transferred to the garbage transfer pipe through the garbage outlet. Even if the garbage stored in the garbage container concentrates to block the garbage outlet, therefore the garbage outlet is automatically released from such a blocked state by the upward flow of the air toward the bypass pipe according to the present invention. Thus, the sucking operation can be continuously carried out to efficiently collect the garbage.

In another embodiment of the present invention, the bypass pipe is provided with valve means for opening/closing its air passage. This valve means preferably comprises pressure detection means for detecting the pressure in the garbage transfer pipe, a movable valve element which is arranged in the bypass pipe, and valve element driving means for bringing the movable valve element to an open position in response to the pressure, detected by the pressure detection means, which is reduced below a prescribed level.

While the garbage stored in the garbage container is sucked and transferred with the air through the garbage outlet, the pressure in the garbage transfer pipe will not be reduced below the prescribed level. In this case, the movable valve element closes the air passage of the bypass pipe. Therefore, the air which is introduced into the garbage container entirely flows through the garbage outlet, to cause no energy loss. Thus, there may be provided a garbage suction/transfer unit which can efficiently suck and transfer garbage from a garbage container with no energy loss.

When a large quantity of garbage concentrates to block the garbage outlet, on the other hand, the air flow to the garbage transfer pipe is stopped and hence the pressure in the garbage transfer pipe is reduced below the prescribed level. In this case, the movable valve element which is arranged in the bypass pipe is brought into the open position, whereby the air contained in the gas container flows toward the bypass pipe. Due to the upward flow of the air, the garbage stored in the garbage container is upwardly sucked to release the garbage outlet from the blocked state. Thus, the garbage outlet is so opened that the garbage is again sucked and transferred to the garbage transfer pipe through the garbage outlet. Consequently, the pressure in the garbage transfer pipe exceeds the prescribed level, whereby the movable valve element provided in the bypass pipe is brought into a closed position.

In another embodiment of the present invention, the air intake pipe comprises a first intake pipe which is connected to the garbage container in the vicinity of the garbage outlet, and a second intake pipe which is connected to the garbage container at a position upwardly separated from the first intake pipe. In this case, the garbage suction/transfer unit preferably comprises a first valve for opening/closing an air passage of the first intake pipe, a second valve for opening/closing an air passage of the second intake pipe, a first pressure detector for detecting an internal pressure around a connected portion between the first intake pipe and the garbage container, a second pressure detector for detecting an internal pressure around a connected portion between the second intake pipe and the garbage container, a third pressure detector for detecting the pressure in the garbage transfer pipe, and control means for controlling opening/closing operations of the first and second valves on the basis of information detected in the respective pressure detectors.

Preferably, the control means brings the first and second valves into open and closed positions respectively in starting of a sucking operation. Further, the control means brings the first and second valves to closed and open positions respectively when difference between pressure values detected by the first and second detectors is reduced below a prescribed level. In addition, the control means terminates the sucking operation when difference between the pressure values detected by the second and third pressure detectors is reduced below a prescribed level.

Due to the aforementioned control means, the garbage which is stored in the garbage container is efficiently sucked and transferred successively from a lower part thereof.

In another embodiment of the present invention, the air intake pipe comprises a stem pipe, a first branch pipe, and a second branch pipe. The first branch pipe is branched from the stem pipe, and connected to the garbage container in the vicinity of the garbage outlet. The second branch pipe is also branch from the step pipe, and connected to the garbage container at a position upwardly separated from the first branch pipe. In this aspect, the stem pipe is preferably provided with a valve for opening/closing its air passage. In this embodiment, air is introduced through the branch pipes which are located in upper and lower portions, whereby the air can be effectively pressed against garbage which is vertically stacked in the garbage container.

In another embodiment of the present invention, the garbage suction/transfer unit comprises garbage detection means for detecting presence/absence of garbage in the garbage container, and control means for terminating a sucking operation in response to absence of garbage detected by the garbage detection means. In this embodiment, a termination period of the sucking operation is so correctly controlled that it is possible to avoid energy loss and reduce the working time.

Thus, there may be provided a garbage suction/transfer unit which can efficiently suck and transfer garbage from a garbage container with no energy loss.

In another embodiment of the present invention, the garbage suction/transfer unit comprises an inlet pipe having a lower end which is connected to the garbage inlet, and an inlet gate for opening/closing a passage of the inlet pipe. In starting of a sucking operation, the inlet gate is controlled to be brought into a closed position. In termination of the sucking operation, on the other hand, the inlet gate is controlled to be brought into an opening position. In this embodiment, the inlet gate is brought into the closed position during the sucking operation, whereby it is possible to prevent air from flowing through the garbage inlet.

In another embodiment of the present invention, the air intake pipe comprises a first intake pipe which is connected to the garbage container in the vicinity of the garbage outlet, a second intake pipe which is connected to the garbage container at a position upwardly separated from the first intake pipe, a first valve for opening/closing an air passage of the first intake pipe, and a second valve for opening/closing an air passage of the second intake pipe. In this embodiment, the first valve is first brought into an open position so that the second valve is thereafter brought into an open position in a sucking operation. In termination of the sucking operation, on the other hand, the second valve is first brought into a closed position, so that the first valve is thereafter brought into a closed position.

In another embodiment of the present invention, the air intake pipe upwardly feeds air from a lower portion in the garbage container. In this embodiment, the garbage is stirred or loosened by such an upward flow of the air. Thus, it is possible to effectively prevent the garbage outlet from blocking caused by concentration of a large quantity of garbage.

When such an air intake pipe for upwardly feeding air from a lower portion is employed, further, a garbage entrance inhibitor is preferably provided on an opening of the air intake pipe for inhibiting the garbage from entering the air intake pipe.

The foregoing and other features, aspects and advantages of the present invention will become more apparent from the following detailed description of specific embodiments of the present invention when taken in conjunction with the accompanying drawings.

### BRIEF DESCRIPTION OF THE DRAWINGS

Fig. 1 illustrates a conventional garbage suction/transfer unit;
Fig. 2 illustrates a garbage suction/transfer unit according to an embodiment of the present invention;
Fig. 3 illustrates a principal part of the embodiment of the present invention in an enlarged manner;
Fig. 4 illustrates a principal part of another embodiment of the present invention;
Fig. 5 illustrates a principal part of still another embodiment of the present invention;
Fig. 6 illustrates a principal part of a further embodiment of the present invention;
Fig. 7 is a flow chart showing a first half of a garbage sucking operation;
Fig. 8 is a flow chart showing a second half of the garbage sucking operation;
Fig. 9 illustrates a principal part of a further embodiment of the present invention;
Fig. 10 illustrates a principal part of a further embodiment of the present invention;
Figs. 10A and 10B are views corresponding to a cross section taken along line A-A;
Fig. 11 illustrates a principal part of a further embodiment of the present invention;
Fig. 12 illustrates a principal part of a further embodiment of the present invention;
Fig. 13 is a flow chart showing a first half of a garbage sucking operation;
Fig. 14 is a flow chart showing a second half of the garbage sucking operation;
Fig. 15 is a flow chart showing another exemplary second half of the garbage sucking operation;
Fig. 16 illustrates a principal part of a further embodiment of the present invention;
Fig. 17 illustrates an exemplary garbage entrance inhibitor;
Fig. 18 illustrates another exemplary garbage entrance inhibitor;
Fig. 19 is a partially fragmented sectional view showing a connected portion of an air intake pipe;
Fig. 20 illustrates an exemplary opening of the air intake pipe; and
Fig. 21 illustrates another exemplary opening of the air intake pipe.

### DESCRIPTION OF THE PREFERRED EMBODIMENTS

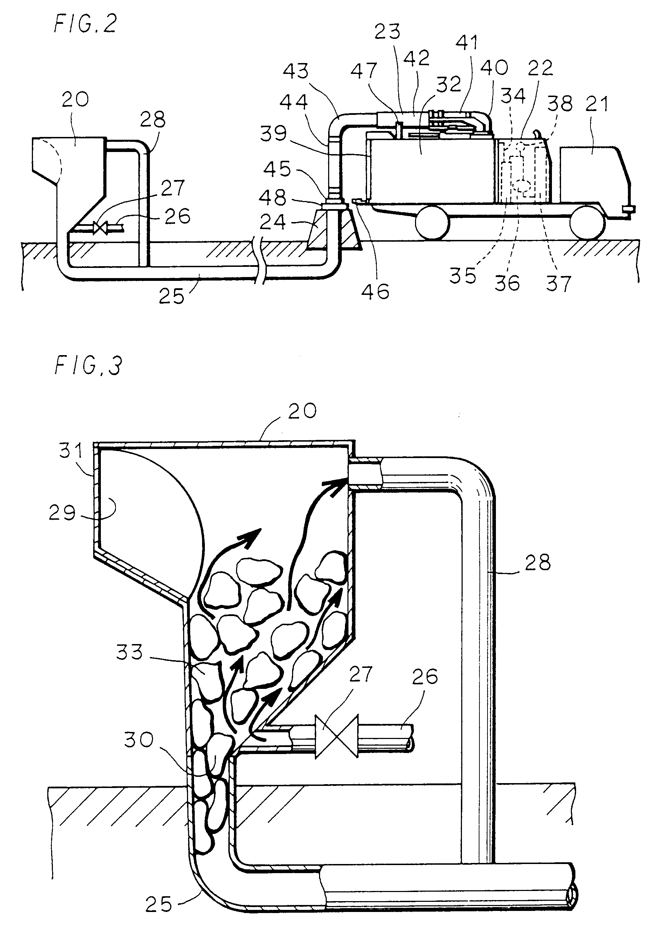

Referring to Fig. 2, a garbage truck 21 comprises a vacuum suction unit 22, a suction pipe 23, and a garbage tank 32. The structure of this garbage truck 21 is described later in detail.

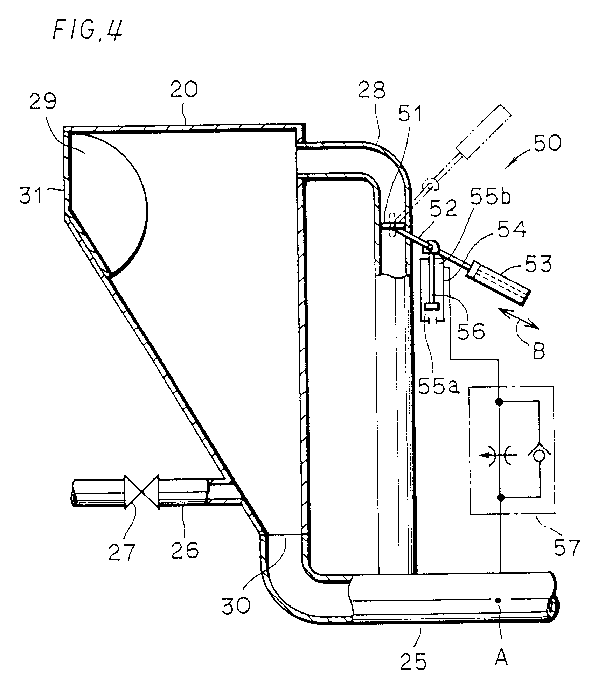

A garbage container 20 is installed in a proper place of a multiple dwelling house or the like. Referring to Fig. 3, the garbage container 20 has a garbage inlet 29 and a garbage outlet 30 on its upper and lower portions respectively. In order to define the garbage inlet 29, a closing member 31 is rotatably provided on the upper portion of the garbage container 20. When the closing member 31 is closed, the garbage container 20 is sealed as shown in Fig. 3. As shown in Fig. 3, further, the lower portion of the garbage container 20 is converged toward the garbage outlet 30. Therefore, garbage 33 is smoothly moved toward the garbage outlet 30.

A garbage transfer pipe 25 extending in the ground has an end which is connected to the garbage outlet 30 of the garbage container 20, and another end which is connected to a lower end of the suction pipe 23 at a docking station 24.

An air intake pipe 26 having a valve 27 is connected to a lower portion of the garbage container 20 close to the garbage outlet 30. This air intake pipe 26 is adapted to introduce air into the garbage container 20 in a sucking operation. The air intake pipe 26 is connected to an air source (not shown) of the garbage truck 21 through the docking station 24. Alternatively, the air source may be provided on the garbage container 20. The valve 27 is so opened/closed as to control introduction of air.

The feature of the present invention resides in provision of a bypass pipe 28. This bypass pipe 28 has an end which is connected to the upper portion of the garbage container 20 and another end which is connected to the garbage transfer pipe 25, to define a bypass suction passage.

The structure of the garbage truck 21 is now described in further detail.

The vacuum suction unit 22 comprises a suction passage 34 having an end which is connected to the garbage tank 32 and another end which is open to the atmospheric air, a water scrubber 35 which is provided in the suction passage 34, a blower 36 which is provided in a portion of the suction passage 34 closer to the end being open to the atmospheric air than the water scrubber 35, and a silencer 37 which is provided in a portion of the suction passage 34 closer to the end being open to the atmospheric air than the water scrubber 35.

When an engine of the garbage truck 21 is driven, the blower 36 is driven in response to the engine speed. Thus, the atmosphere in the garbage container 20 is negatively pressurized through the garbage transfer pipe 25.

A pressure sensor 38 is provided in a portion of the suction passage 34 between the water scrubber 35 and the blower 36, in order to detect the value of the negative pressure which is applied by the blower 36.

The garbage tank 32 comprises a door 39 on its rear end. This door 39 is formed to be rearwardly open about its upper edge. A horizontally slidable discharge plate (not shown) is arranged in the garbage tank 32. This discharge plate is so moved as to rearwardly discharge garbage which is introduced into the garbage tank 32.

The suction pipe 23 includes a swing pipe 40 which is connected to the garbage tank 32 on its upper portion to be rotatable about a vertical axis, a flexible pipe 41 which is connected to the swing pipe 40, a hinged pipe 42 which is hingeably connected to the flexible pipe 41, an expansion pipe 43 which is connected to the hinged pipe 42, another flexible pipe 44 which is connected to the expansion pipe 43, and a forward end portion 45 which is connected to the flexible pipe 44. A support member 46 supports the forward end portion 45 in movement of the vehicle. Further, a support frame 47 supports the hinged pipe 42.

In order to collect garbage, the garbage truck 21 is stopped in the vicinity of the docking station 24. The forward end portion 45 of the suction pipe 23 is moved to a proper position by swinging of the swing pipe 40, hinging of the hinged pipe 42, expansion of the expansion pipe 43 and the like, so that the same is connected to a forward end portion 48 of the garbage transfer pipe 25 at the docking station 24.

The garbage truck 21 is provided with a control unit (not shown). This control unit receives manipulate signals from various control switches, a detection signal from the pressure sensor 38 and the like, as well as detection signals from various detectors. Further, signal cables (not shown) are installed through the docking station 24, in order to transfer the signals between the control unit of the garbage truck 21 and detectors provided on the garbage container 20 etc. The control unit controls movements of the vacuum suction unit 22 and the suction pipe 23 of the garbage truck 21 and an operation of the valve 27 for opening/closing the air passage of the air intake pipe 26, on the basis of the manipulate signals and the detection signals. The control unit and a manipulation unit may alternatively be provided on the garbage container 20.

The operation of the garbage suction/transfer unit is now described.

The garbage 33 which is introduced through the garbage inlet 29 is stored in the garbage container 20. In order to collect the garbage 33 which is stored in the garbage container 20, the garbage truck 21 is first stopped in the vicinity of the docking station 24. Then, the forward end portion 45 of the suction pipe 23 is connected to the forward end portion 48 of the garbage transfer pipe 25 at the docking station 24.

The blower 36 is driven while opening the valve 27. Thus, the garbage 33 stored in the garbage container 20 is sucked and transferred to the garbage tank 32 through the garbage transfer pipe 25, with air which is introduced through the air intake pipe 26.

When the garbage 33 stored in the garbage container 20 concentrates to the garbage outlet 30 to block the same during the aforementioned sucking operation, the air which is introduced through the air intake pipe 26 upwardly flows toward the bypass pipe 28, as shown by arrows in Fig. 3. Due to such an upward flow of the air, the garbage 33 is upwardly sucked in the garbage container 20 and released from the concentrating state, to finally relieve the garbage outlet 30 from clogging. Consequently, the garbage outlet 30 is so opened that the garbage 33 is sucked and transferred to the garbage tank 32 through the garbage outlet 30 and the garbage transfer pipe 25, with the air introduced through the air intake pipe 26.

Due to provision of the aforementioned bypass pipe 28, it is possible to automatically relieve the garbage outlet 30 from clogging of the garbage 33. Thus, it is possible to continuously carry out the garbage sucking operation, thereby efficiently collecting the garbage 33.

In the embodiment shown in Figs. 2 and 3, a single garbage container 20 is connected to a single garbage transfer pipe 25. Alternatively, a plurality of garbage containers may be connected to a single garbage transfer pipe 25. In this case, the respective garbage containers are negatively pressurized and thereafter the valve 27 of a garbage container to be subjected to garbage suction is opened, so that garbage can be sucked and collected from only the garbage container which is connected to this opened valve 27. Thus, it is not necessary to provide a discharge gate on the garbage transfer pipe 25, dissimilarly to the conventional garbage suction/transfer unit. In the conventional garbage suction/transfer unit which is provided with a discharge gate, projecting and depressing portions are defined in the vicinity of the discharge gate to hinder transfer of garbage. However, no such projecting and depressing portions are defined in the embodiment of the present invention. Thus, it is possible to smoothly suck/transfer garbage.

Fig. 4 illustrates a principal part of another embodiment of the present invention. Numerals identical to those of the first embodiment indicate the same or corresponding elements. The feature of the embodiment shown in Fig. 4 resides in that a valve mechanism 50 is provided on a bypass pipe 28, in order to open/close its air passage. The valve mechanism 50 comprises a valve element 51 which is provided to be rotatable about a central axis, a coupling member 52 which is connected to the valve element 51, a weight 53 which is mounted on an end of the coupling member, an air cylinder 54, and a throttle valve 57.

The air cylinder 54 has a rod 56, whose forward end is connected to the coupling member 52.

In the state shown in Fig. 4, the valve element 51 closes the air passage in the bypass pipe 28. When the rod 56 of the air cylinder 54 is extended from this state, the valve element 51 opens the air passage, as shown by phantom lines. The weight 53 is formed to be slidable along arrow B. Therefore, it is possible to adjust the force acting on the valve element 51 by adjusting the position of the weight 53.

A piston chamber 55a of the air cylinder 54 is opened to the atmospheric air. On the other hand, a rod chamber 55b communicates with a garbage transfer pipe 25 through the throttle valve 57. When the garbage transfer pipe 25 is negatively pressurized, therefore, the rod chamber 55b is also negatively pressurized through the throttle valve 57. Consequently, large pressure difference is caused between the rod chamber 55b and the piston chamber 55a, to extend the rod 56. When the force for extending the rod 56 exceeds the force of the weight 53 holding the valve element 51 at the closed position, the rod 56 upwardly raises the weight 53, to finally bring the valve element 51 to the open position shown by phantom lines. Thus, it is possible to bring the valve element 51 to the open position when the garbage transfer pipe 25 is negatively pressurized below a desired pressure level, by adjusting the position of the weight 53.

When a garbage sucking operation is normally carried out, the valve element 51 closes the air passage of the bypass pipe 28.

When garbage stored in a garbage container 20 concentrates to a garbage outlet 30 to block the same, the garbage transfer pipe 25 is negatively pressurized to a higher level than that in normal garbage suction. When the pressure in the garbage transfer pipe 25 is reduced below a prescribed level such that a pressure value at a point A in Fig. 4 is below -10 kPa (-1000 mmAq), for example, a check valve mechanism of the throttle valve 57 is opened to negatively pressurize the rod chamber 55b. Thus, the rod 56 is extended against the weight 53, to bring the valve element 51 into the open position and open the air passage.

When the valve element 51 is brought into the open position, air which is introduced from an air intake pipe 26 upwardly flows toward the bypass pipe 28, similarly to the aforementioned embodiment. Due to the upward flow of the air, garbage is released from a concentrating state to open the garbage outlet 30. Thus, a normal garbage sucking operation is started so that the pressure in the garbage transfer pipe 25 exceeds the aforementioned prescribed level. Consequently, the pressure in the rod chamber 55b of the air cylinder 54 is also increased to reduce the pressure difference between the rod chamber 55b and the piston chamber 55a. Thus, the rod 56 is retracted by the weight 53. At this time, air gradually flows into the rod chamber 55b through a throttle mechanism of the throttle valve 57. Finally the valve 51 is brought into a closed position.

In the embodiment shown in Fig. 4, the valve element 51 is opened only when the garbage outlet 30 is blocked. In other words, the valve 51 is in the closed position in a normal sucking operation, to shut the air passage of the bypass pipe 28. In the normal sucking operation, therefore, no part of the air which is introduced from the air intake pipe 26 flows through the bypass pipe 28, so that the air can be entirely adapted to transfer garbage.

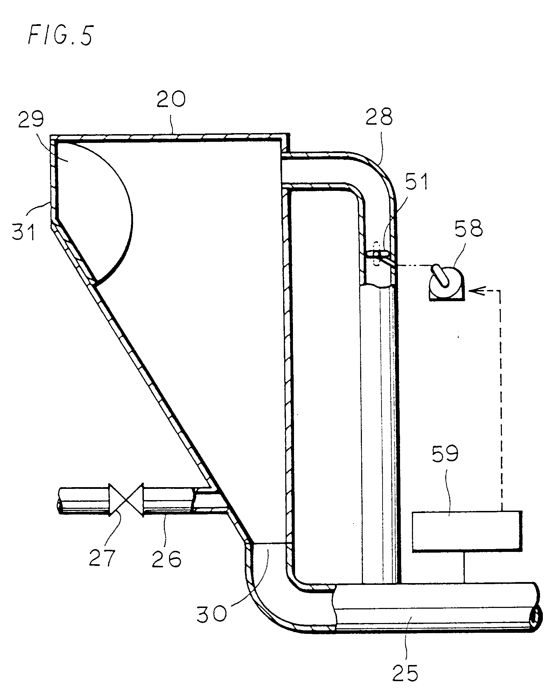

Fig. 5 illustrates a principal part of still another embodiment of the present invention. Also in this embodiment, a bypass pipe 28 is provided with valve means. This valve means comprises a valve element 51 which is rotatably provided in the bypass pipe 28, a rotary solenoid 58, and a pressure sensor 59. The pressure sensor 59 detects the pressure in a garbage transfer pipe 25. When the pressure value detected by the pressure sensor 59 is reduced below a prescribed pressure level, the rotary solenoid 58 operates to bring the valve element 51 to an open position.

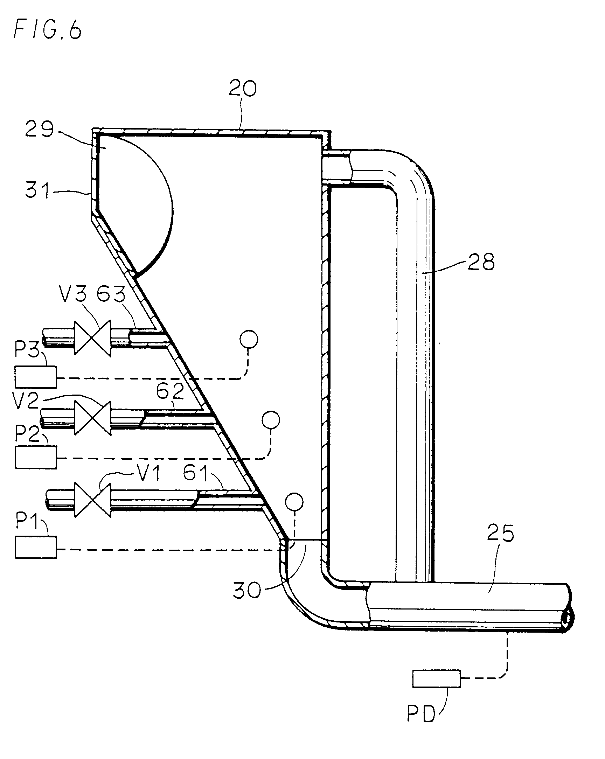

Fig. 6 illustrates a principal part of a further embodiment of the present invention. According to this embodiment, an air intake pipe for introducing air into a garbage container 20 comprises a first intake pipe 61, a second intake pipe 62, and a third intake pipe 63. The first intake pipe 61 is connected to the garbage container 20 in the vicinity of a garbage outlet 30. The second intake pipe 62 is connected to the garbage container 20 at a position which is upwardly separated from the first intake pipe 61 by a prescribed distance. The third intake pipe 63 is connected to the garbage container 20 at a position which is upwardly separated from the second intake pipe 62 by a prescribed distance. The intake pipes 61, 62 and 63 are provided with first, second and third valves V1, V2 and V3 respectively. These valves V1 to V3 are opened/closed by actuators (not shown).

The embodiment shown in Fig. 6 is further provided with a first pressure detector P1 for detecting an internal pressure around a connected portion between the first intake pipe 61 and the garbage container 20, a second pressure detector P2 for detecting an internal pressure around a connected portion between the second intake pipe 62 and the garbage container 20, and a third pressure detector P3 for detecting an internal pressure around a connected portion between the third intake pipe 63 and the garbage container 20. In this embodiment, sensors of the pressure detectors P1 to P3 detect the pressure in the garbage container 20. Alternatively, the sensors provided in the respective pressure detectors P1 to P3 may detect pressures in the intake pipes 61 to 63. The embodiment shown in Fig. 6 is further provided with a pressure detector PD for detecting the pressure in the garbage transfer pipe 25.

The values of the pressures detected by the respective pressure detectors P1, P2, P3 and PD are inputted in a control unit (not shown). The control unit drives the actuators on the basis of the as-received pressure information, to control operations for opening/closing the respective valves V1, V2 and V3.

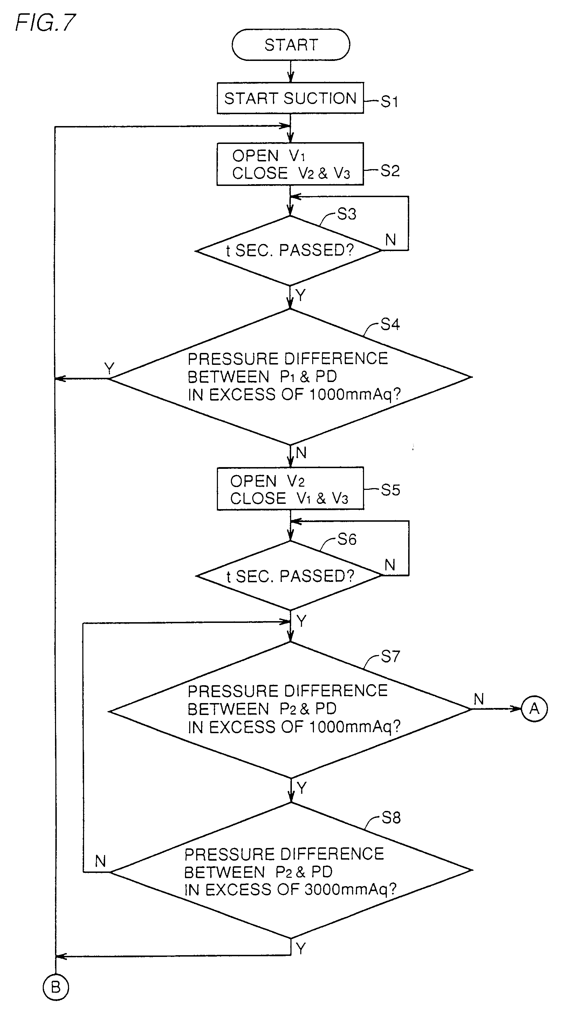

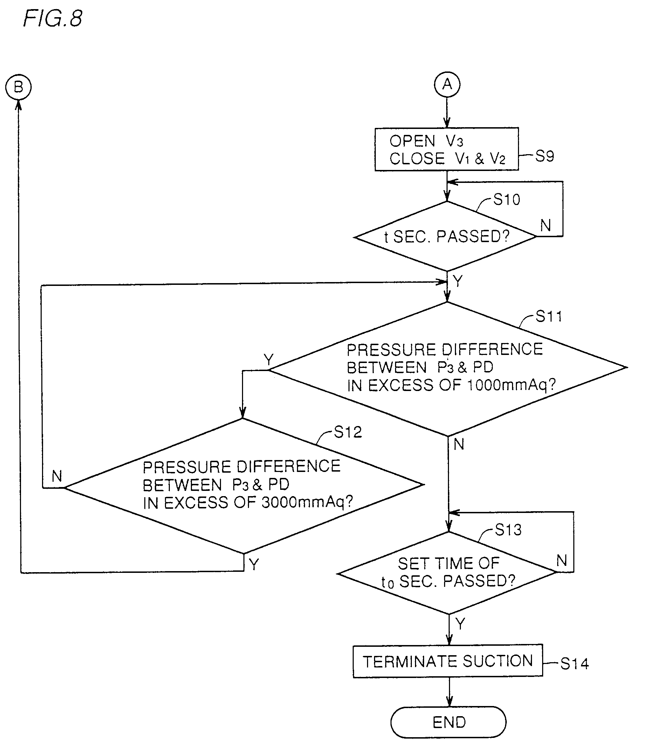

With reference to flow charts shown in Figs. 7 and 8, the opening/closing operations of the valves V1, V2 and V3 carried out by the aforementioned control unit are now described in more concrete terms.

First, the first valve V1 is brought into an open position and the second and third valves V2 and V3 are brought into closed positions at steps S1 and S2, to start a sucking operation. After a lapse of a prescribed time of t seconds (step S3), a determination is made at a step S4 as to whether or not difference between the pressure values detected by the first pressure detector P1 and the pressure detector PD is in excess of 10 kPa (1000 mmAq).

If the pressure difference is in excess of 10 kPa (1000 mmAq), it is recognized that garbage is present around the connected portion between the first intake pipe 61 and the garbage container 20, and the process is returned to the step S2. The garbage sucking operation is continuously carried out while introducing air from the first valve V1.

If a determination is made at the step S4 that the pressure difference is less than 10 kPa (1000 mmAq), on the other hand, it is recognized that garbage is sucked and transferred from around the connected portion between the first intake pipe 61 and the garbage container 20, and the process is advanced to a step S5.

At the step S5, the second valve V2 is brought into an open position and the first and third valves V1 and V3 are brought into closed positions. After a lapse of the prescribed time of t seconds in this state (step S6), a determination is made at a step S7 as to whether or not difference between the pressure values detected by the second pressure detector P2 and the pressure detector PD is in excess of 10 kPa (1000 mmAq). If the determination is of YES, the process is advanced to a step S8.

At the step S8, a determination is made as to whether or not difference between the pressure values detected by the second pressure detector P2 and the pressure detector PD is in excess of 30 kPa (3000 mmAq). If the determination is of YES, it is recognized that a large quantity of garbage is still present in a portion below the connected portion between the second intake pipe 62 and the garbage container 20, and the process is returned to the step S2, to carry out the steps S2 to S7. If the determination is of NO, on the other hand, the process is returned to the step S7, to continuously carry out the sucking operation while introducing air into the garbage container 20 from the second intake pipe 62.

If a determination is made at the step S7 that the pressure difference is less than 10 kPa (1000 mmAq), the process is advanced to a step S9.

At the step S9, the third valve V3 is brought into an open position and the first and second valves V1 and V2 are brought into the closed positions. After a lapse of the prescribed time of t seconds (step S10), a determination is made at a step S11 as to whether or not difference between the pressure values detected by the third pressure detector P3 and the pressure detector PD is in excess of 10 kPa (1000 mmAq). If the determination is of YES, the process is advanced to a step S12.

At the step S12, a determination is made as to whether or not the aforementioned pressure difference is in excess of 30 kPa (3000 mmAq). If the determination is of YES, it is recognized that a large quantity of garbage is present in a portion below the connected portion between the third intake pipe 63 and the garbage container 20, and the process is returned to the steps S2 to carry out the aforementioned steps S2 to S11. If the determination is of NO, on the other hand, the process is returned to the step S11, to continuously carry out the sucking operation while introducing air into the garbage container 20 through the third intake pipe 63.

If a determination is made at the step S11 that the pressure difference is less than 10 kPa (1000 mmAq), the sucking operation is terminated after a lapse of a set time of t₀ seconds (steps S13 and S14).

As hereinabove described, it is possible to efficiently suck and transfer garbage which is stored in the garbage container 20 successively from a lower part by controlling the opening/closing operations of the first, second and third valves V1, V2 and V3 on the basis of the pressure values detected by the pressure detectors P1, P2, P3 and PD. Thus, it is also possible to increase the size of the garbage container 20.

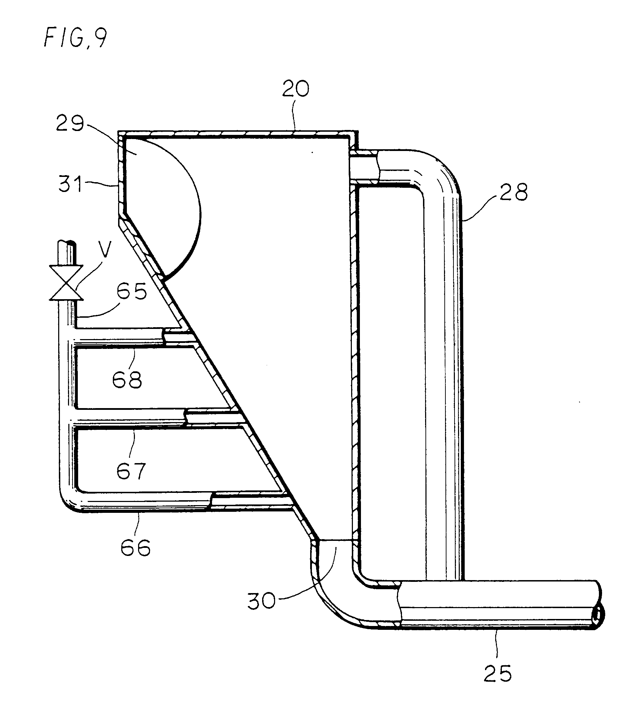

Fig. 9 illustrates a principal part of a further embodiment of the present invention. According to this embodiment, an air intake pipe for introducing air into a garbage container 20 comprises a stem pipe 65, a first branch pipe 66, a second branch pipe 67, and a third branch pipe 68. The first branch pipe 66 is connected to the garbage container 20 at a portion close to a garbage outlet 30 thereof. The second branch pipe 67 is connected to the garbage container 20 at a position which is upwardly separated from the first branch pipe 66. The third branch pipe 68 is connected to the garbage container 20 at a position which is upwardly separated from the second branch pipe 67. The stem pipe 65 is provided with a valve V for opening/closing its air passage. In a sucking operation, it is possible to suck and transfer garbage which is stored in the garbage container 20 successively from a lower part since air is introduced from the vertically arranged three branch pipes 66, 67 and 68.

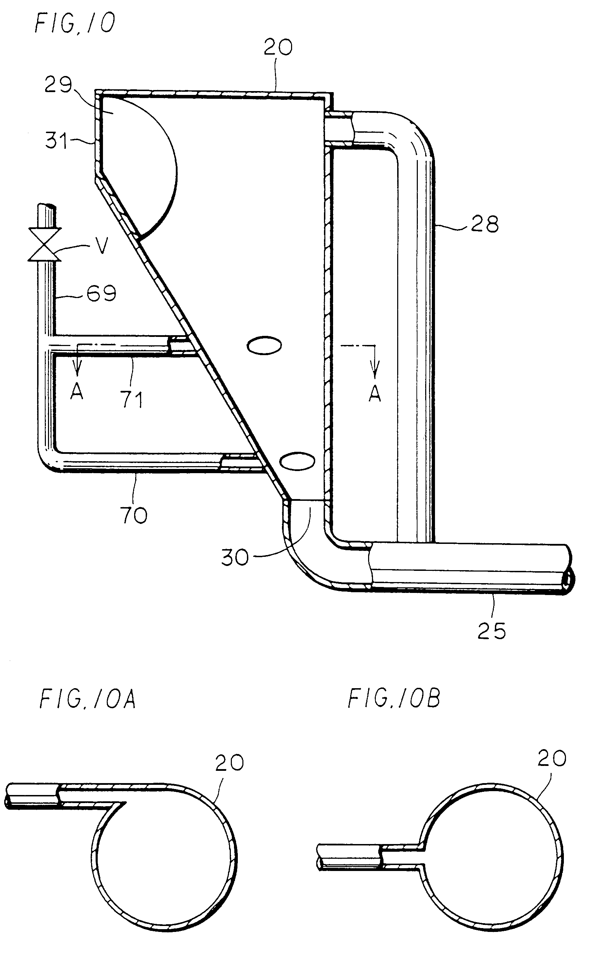

Fig. 10 illustrates a principal part of a further embodiment of the present invention. According to this embodiment, an air intake pipe for introducing air into a garbage container 20 comprises a stem pipe 69, and two branch pipes 70 and 71 which are branched from the stem pipe 69. The stem pipe 69 is provided with a valve V for opening/closing its air passage. The two branch pipes 70 and 71 are vertically separated from each other. In a sucking operation, therefore, it is possible to suck and transfer garbage which is stored in the garbage container 20 successively from a lower part, similarly to the embodiment shown in Fig. 9.

With regard to connection between the branch pipes 70, 71 and the garbage container 20, either structure as shown in Fig. 10A or Fig. 10B may be adopted. According to the structure as shown in Fig. 10A, the air is introduced into the garbage container 20 in a tangential direction and therefore, a spiral air stream is produced in the garbage container 20. Thus, the concentration of garbage is relieved.

In each of the aforementioned embodiments of the present invention, the garbage container 20 includes a vertical wall upwardly extending from the garbage outlet 30 and an inclined wall, which is opposite to the vertical wall, obliquely upwardly extending from the garbage outlet 30. The angle of inclination of the inclined wall with respect to a horizontal plane is preferably within a range of 45 to 60°. Thus, the lower portion of the garbage container 20 is converged toward the garbage outlet 30, so that it is possible to smoothly move the garbage which is stored in the garbage container 20 toward the garbage outlet 30.

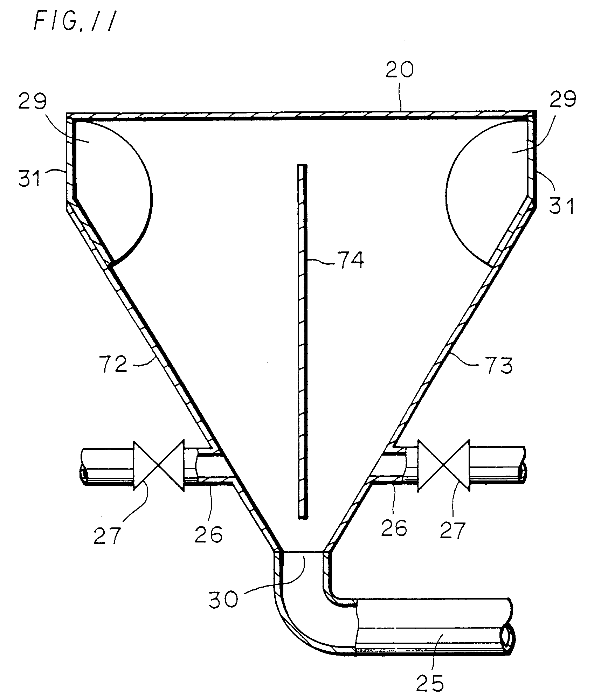

Fig. 11 illustrates a principal part of a further embodiment of the present invention. According to this embodiment, a garbage container 20 is provided with left and right side walls 72 and 73 obliquely upwardly extending from a garbage outlet 30. A vertically extending partition 74 is arranged at a central portion of the garbage container 20.

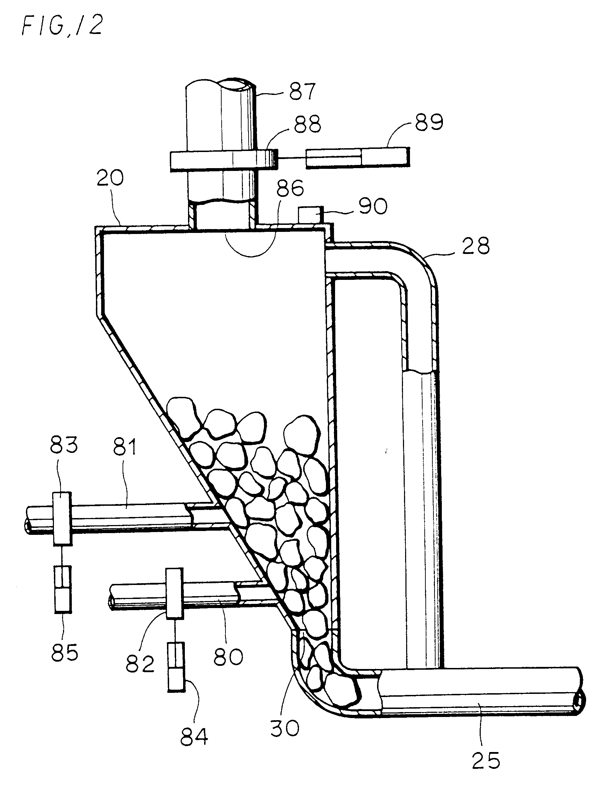

Fig. 12 illustrates a principal part of a further embodiment of the present invention. According to this embodiment, an inlet pipe 87 is connected to an upper surface of a garbage container 20. A lower end of the inlet pipe 87 communicates with a garbage inlet 86. Garbage is introduced into the garbage container 20 through the inlet pipe 87. As shown in Fig. 12, an inlet gate 88 is provided on a lower portion of the inlet pipe 87, in order to open/close a passage of the inlet pipe 87. An air cylinder 89 controls movement of the inlet gate 88.

A detector (not shown) such as a limit switch is arranged in the vicinity of the inlet gate 88, in order to detect opening/closing thereof.

First and second intake pipes 80 and 81 are provided in order to introduce air into the garbage container 20. The first intake pipe 80 is connected to the garbage container 20 at a position close to a garbage outlet 30. The second intake pipe 81 is connected to the garbage container 20 at a position which is upwardly separated from the first intake pipe 80. The first intake pipe 80 is provided with a first valve 82 which is opened/closed by a first air cylinder 84. The second intake pipe 81 is provided with a second valve 83 which is opened/closed by the second air cylinder 85.

The air cylinders 84, 85 and 89 are connected to an air source (not shown) through air hoses (not shown). The air source may be installed in a garbage truck, or in the vicinity of the garbage container 20. When the air source is installed in the garbage truck, the air hoses extending from the air cylinders 84, 85 and 89 are connected to those extending from the garbage truck at a docking station.

Detectors (not shown) such as limit switches are arranged in the vicinity of the first and second valves 82 and 83 for detecting opening/closing thereof.

The garbage container 20 is provided on its upper portion with a garbage detector 90 for detecting presence/absence of garbage in the garbage container 20. This garbage detector 90 is prepared from an optical sensor for projecting light toward the garbage outlet 30 from the upper portion of the garbage container 20, for example. When such an optical sensor is employed, absence of garbage is determined if there is no obstacle within a constant distance (between the upper surface of the garbage container 20 and the garbage outlet 30, for example).

The embodiment shown in Fig. 12 is so controlled that a sucking operation is terminated when the garbage detector 90 detects absence of garbage. Such control means preferably also controls opening/closing operations of the first and second valves 82 and 83 and the inlet gate 88.

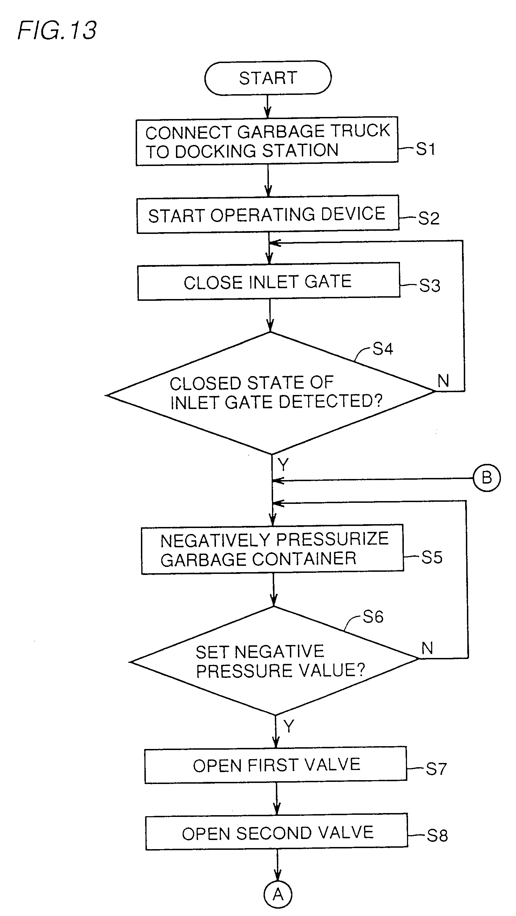

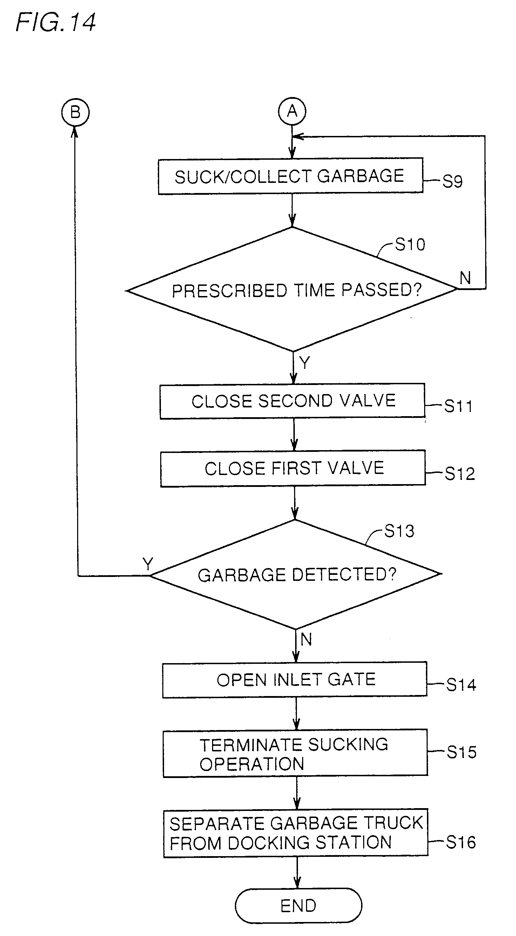

With reference to Figs. 13 and 14, the control operation of this embodiment is now described.

In order to suck and transfer garbage which is stored in the garbage container 20, the garbage truck is first stopped in the vicinity of the docking station, so that a suction pipe of the garbage truck is connected with a garbage transfer pipe 25 at the docking station (step S1).

An operating device is started at a step S2, so that the inlet gate 88 is brought into a closed position at a step S3. The closed state of the inlet gate 88 is detected by the detector at a step S4, so that the process is advanced to a step S5. At the step S5, a blower of the garbage truck is driven to negatively pressurize the garbage container 20.

When the garbage container 20 reaches a previously set negative pressure value (varied with the size of the garbage container 20 etc. but generally set at 20 to 40 kPa (2000 to 4000 mmAq)) at a step S6, the process is advanced to a step S7. At the step S7, the first valve 82 is brought into an open position, to introduce air into the garbage container 20 through the first intake pipe 80. The air which is introduced through the first intake pipe 80 is sucked and transferred with the garbage to a garbage tank of the garbage truck through the garbage outlet 30 and the garbage transfer pipe 25.

When a prescribed time elapses after the first valve 82 is brought into the open position, the second valve 83 is brought into an open position at a step S8. In this state, air is introduced into the garbage container 20 through both of the first and second intake pipes 80 and 81. The air thus introduced into the garbage container 20 is sucked and transferred with the garbage to the garbage tank of the garbage truck through the garbage outlet 30 and the garbage transfer pipe 25.

As hereinabove described, the second valve 83 is opened after the first valve 82 is opened for the prescribed time, so that a part of the garbage which is stored in the vicinity of the garbage outlet 30 is discharged from the same. Following this discharge operation, an intermediate part of the garbage is loosened to gradually fall toward the garbage outlet 30, so that the garbage is discharged successively from a lower part. Then the second valve 83 is so opened that an upper part of the garbage is loosened and guided to the garbage outlet 30. Thus, a large quantity of garbage which is stored in the garbage container 20 is not simultaneously be gathered to the garbage outlet 30 but can be smoothly sucked and transferred.

The garbage stored in the garbage container 20 is collected in the garbage tank of the garbage truck in the aforementioned manner (step S9), and after a lapse of a prescribed time (step S10), the second valve 83 is brought into a closed position at a step S11 and then the first valve 82 is brought into a closed position at a step S12.

At a step S13, the garbage detector 90 detects presence/absence of garbage in the garbage container 20. If presence of garbage is detected, the process is returned to the step S5 to carry out the garbage sucking operation of the steps S5 to S12 again.

If absence of garbage is detected, on the other hand, the inlet gate 88 is opened at a step S14, to terminate the sucking operation (step S15). Thereafter the suction pipe of the garbage truck is separated from the docking station at a step S16.

As hereinabove described, presence/absence of garbage in the garbage container 20 is detected by the garbage detector 90 to control the termination period of the garbage sucking operation on the basis of the result of detection, whereby it is possible to avoid energy loss and reduce the working time. Further, the first valve 82 is closed after the second valve 83 is closed in termination of the garbage sucking operation, whereby air is introduced into a portion close to the garbage outlet 30 to a final stage for efficiently discharging garbage which is left in the vicinity of the garbage outlet 13.

The embodiment shown in Fig. 12 is also provided with a bypass pipe 28. Even if the garbage stored in the garbage container 20 concentrates to the garbage outlet 30 to block the same, therefore, it is possible to automatically release the garbage outlet 30 from such a blocked state.

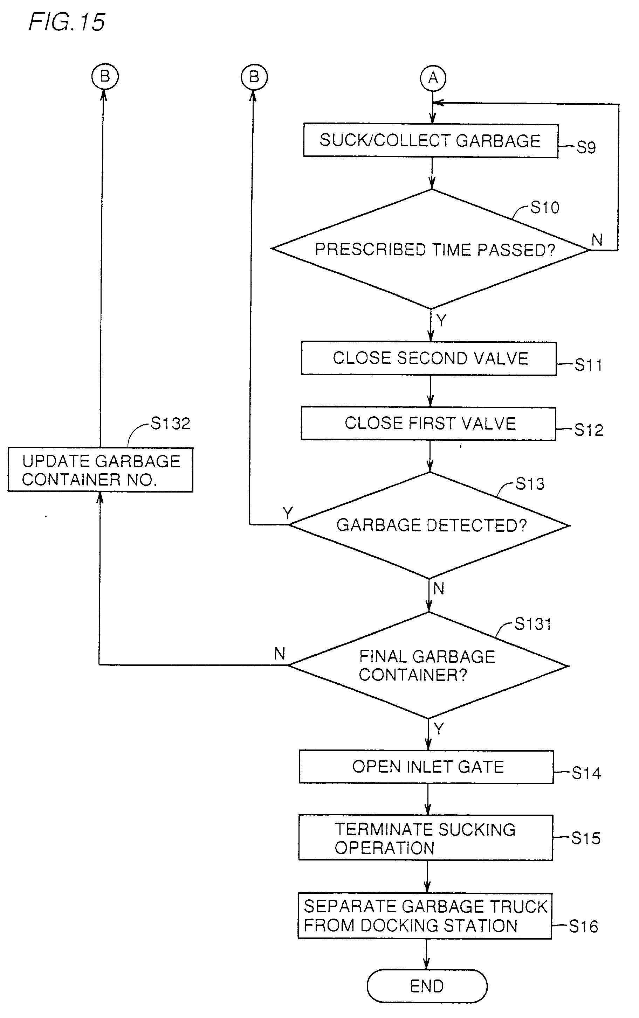

A plurality of the garbage containers 20 shown in Fig. 12 may be connected to a single garbage transfer pipe 25. In this case, the first and second valves 82 and 83 of the garbage container 20 to be subjected to a sucking operation are opened after the respective garbage containers 20 are negatively pressurized, so that garbage can be sucked and transferred only from the garbage container 20 having the opened valves 82 and 83. Namely, a step S131 is provided between the steps S13 and S14 as shown in Fig. 15, in order to determine whether or not the currently treated garbage container 20 is the final one. If the determination is of NO, the number of the garbage container 20 is updated at a step S132, and the process is returned to the aforementioned step S5. In the respective garbage containers 20, all inlet gates 88 are simultaneously opened/closed.

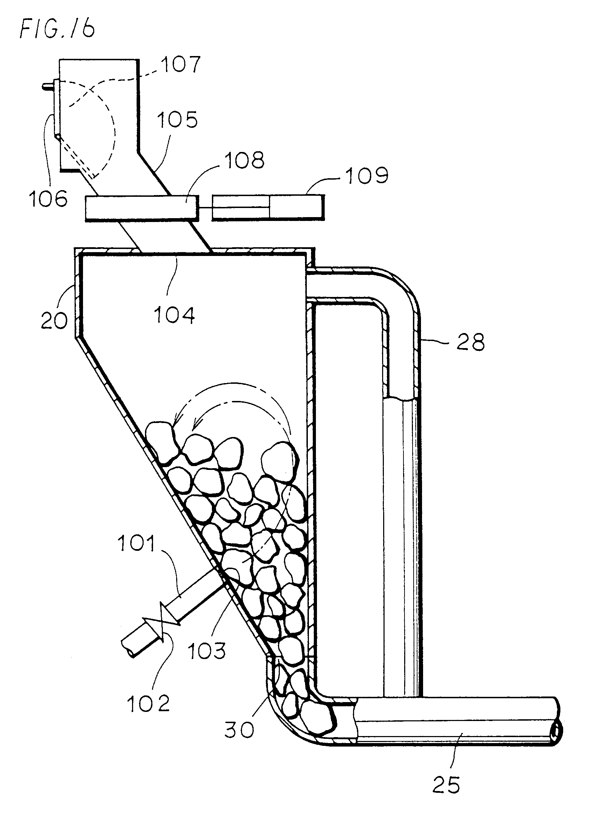

Fig. 16 illustrates a principal part of a further embodiment of the present invention. A garbage container 20 is provided on its upper portion with a garbage inlet opening 104. An inlet pipe 105 upwardly extends from the garbage inlet opening 104. A rotatable closing member 106 is provided on an upper portion of the inlet pipe 105. The closing member 106 defines a garbage inlet 107, which is exposed when the closing member 106 is anticlockwisely rotated from the state shown in Fig. 16.

An inlet gate 108 is provided on a lower portion of the inlet pipe 105, to be opened/closed by an air cylinder 109. A detector (not shown) such as a limit switch is arranged in the vicinity of the inlet gate 108 to detect opening/closing thereof.

In the embodiment shown in Fig. 16, an air intake pipe 101 for introducing air into the garbage container 20 upwardly feeds air from a lower portion of the garbage container 20. In order to form such an air flow, it is preferable that the air intake pipe 101 obliquely upwardly extends as shown in Fig. 16 so that its upper end portion is connected to the garbage container 20. This air intake pipe 101 is provided with a valve 102 for opening/closing its air passage.

In order to inhibit garbage stored in the garbage container 20 from entering the air intake pipe 101, a garbage entrance inhibitor 103 shown in Fig. 17 is mounted on an opening of a connected portion between the air intake pipe 101 and the garbage container 20. The garbage entrance inhibitor 103 comprises a plurality of bar members 110 vertically extending in the form of a lattice. A surface of the garbage entrance inhibitor 103 is preferably rendered to be flush with an inner wall surface of the garbage container 20, so that the garbage stored in the garbage container 20 can smoothly fall toward the garbage outlet 30.

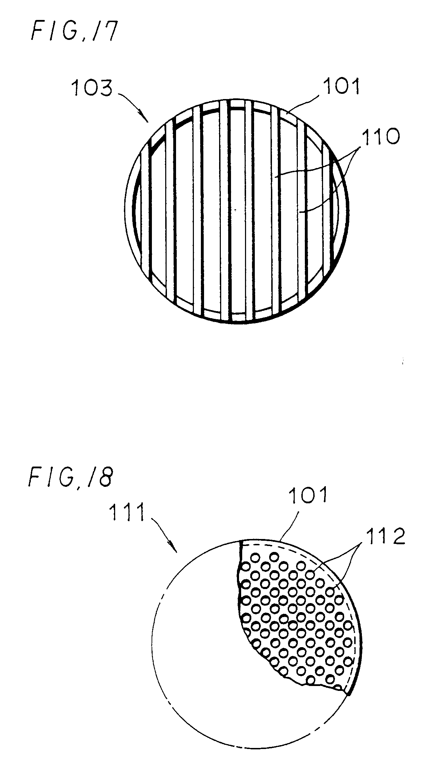

Fig. 18 illustrates another exemplary garbage entrance inhibitor 111. This garbage entrance inhibitor 111 is in the form of a porous plate having a number of through holes 112. Alternatively, the garbage entrance inhibitor may be in the form of a mesh.

In the embodiment shown in Fig. 16, air which is introduced into the garbage container 20 through the air intake pipe 101 upwardly flows from a lower portion. The garbage is stirred or loosened by such an upward flow of the air, whereby the garbage can be smoothly discharged from the garbage container 20 through the garbage outlet 30.

The embodiment shown in Fig. 16 is also provided with a bypass pipe 28. Even if the garbage outlet 30 is blocked by the garbage, therefore, it is possible to automatically release the garbage outlet 30 from such a blocked state.

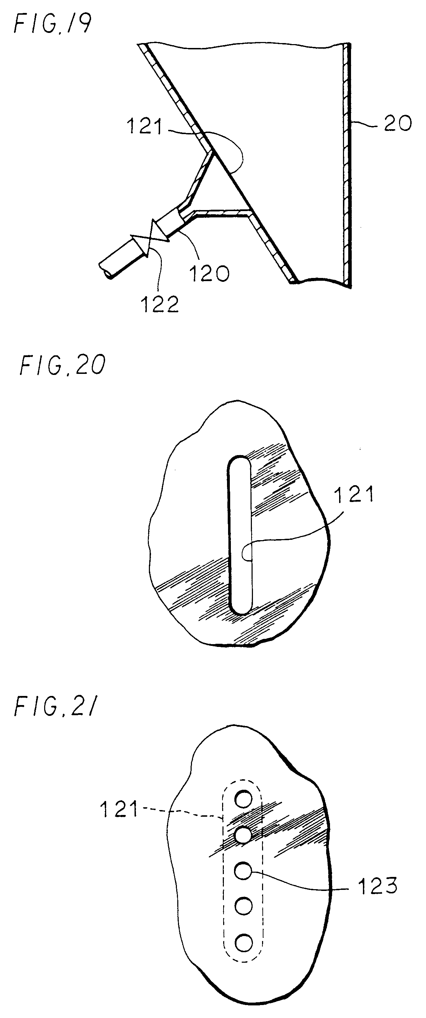

Figs. 19 and 20 illustrate a further exemplary air intake pipe 120. A vertically elongated opening 121 is defined in a connected portion between the air intake pipe 120 for introducing air into the garbage container 20 and the garbage container 20. Due to formation of the elongated opening 121, a region of the air which is introduced into the garbage container 20 is vertically elongated thereby vertically increasing a region for stirring or loosening the garbage stored in the garbage container 20. Therefore, it is possible to smoothly suck and transfer the garbage. The air intake pipe 120 shown in Fig. 19 is also provided with a valve 122 for opening/closing its air passage.

Fig. 21 illustrates another exemplary opening 121, which is defined in a connected portion between an air intake pipe and a garbage container, formed by a plurality of vertically arranged small holes 123.

As hereinabove described, it is possible to efficiently suck garbage which is stored in a garbage container and transfer the same to a garbage tank of a garbage truck.

Although the present invention has been described and illustrated in detail, it is clearly understood that the same is by way of illustration and example only and is not to be taken by way of limitation.

## Claims

1. A garbage disposal unit in which there is provided a garbage container (20) having an upper inlet (29) through which garbage can fall into the container, a lower outlet (30) through which garbage can be removed from the container by suction through a garbage transfer passageway (25), and an air inlet (26) through which air can enter said container during such garbage removal, characterised in that at least a part of said air inlet (26) is located in the vicinity of said outlet (30), and further characterised by means defining a bypass passageway (28) having an opening into said container at a position above the level of said air inlet (26), and communicating with said garbage transfer passageway (25).

2. A unit as claimed in claim 1, including a docking station (24) for receiving a suction pipe of a garbage truck (21) having a vacuum suction unit (22) and a suction pipe (23), and for connecting said suction pipe to the garbage transfer passageway (25).

3. A unit as claimed in claim 1 or claim 2, wherein
a lower portion of said garbage container (20) converges toward said outlet (30).

4. A unit as claimed in any preceding claim, further comprising inlet valve means (27) for opening/closing an air passage of said air inlet (26).

5. A unit as claimed in any preceding claim, further comprising bypass valve means (50) for opening/closing an air passage of said bypass passageway (28).

6. A unit as claimed in claim 5, wherein
said bypass valve means (50) comprises:
pressure detection means (A) for detecting the pressure in said garbage transfer passageway (25),
a movable valve element (51) arranged in said bypass passageway (28) to be movable between an open position for opening said air passage and a closed position for closing said air passage, and
valve element driving means (54) for bringing said movable valve member into said open position in response to reduction of the pressure detected by said pressure detection means (A) below a predetermined value.

7. A unit as claimed in any one of claims 1 to 4, wherein
said air inlet comprises:
a first intake (61) connected to said garbage container (20) in the vicinity of said garbage outlet (30), and
a second intake (62) connected to said garbage container (20) at a position upwardly separated from said first intake.

8. A unit as claimed in claim 7, further comprising:
a first valve (V1) for opening/closing an air passage of said first intake (61),
a second valve (V2) for opening/closing an air passage of said second intake (62),
a first pressure detector (P1) for detecting an internal pressure around a connected portion between said first intake (61) and said garbage container (20),
a second pressure detector (P2) for detecting an internal pressure around a connected portion between said second intake (62) and said garbage container (20),
a third pressure detector (PD) for detecting the pressure in said garbage transfer passageway (25), and
control means for controlling opening/closing operations of said first and second valves on the basis of information detected by respective ones of said pressure detectors.

9. A unit as claimed in claim 8, wherein
said control means is operable to control said operations by:
bringing said first and second valves (V1, V2) to open and closed positions respectively at the start of a sucking operation,
bringing said first and second valves (V1, V2) into closed and open positions respectively when the difference between pressure values detected by said first and third pressure detectors (P1, PD) is reduced below a predetermined value, and
terminating said sucking operation when the difference between pressure values detected by said second and third pressure detectors (P2, PD) is reduced below a predetermined value.

10. A unit as claimed in any one of claims 1 to 4, wherein said air inlet comprises:
a stem pipe (65, 69),
a first branch pipe (66, 70) branching from said stem pipe and connected to said garbage container (20) in the vicinity of said garbage outlet (30), and
a second branch pipe (67; 71) branching from said stem pipe (65) and connected to said garbage container (20) at a position upwardly separated from said first branch pipe (66).

11. A unit as claimed in claim 10, when dependent on claim 4, wherein said inlet valve means comprises a valve (V) for opening/closing an air passage of said stem pipe (65; 69).

12. A unit as claimed in any preceding claim, wherein
said garbage container includes:
a wall (74) extending substantially vertically upwardly from said garbage outlet (30), and
an inclined wall (72), opposite to said vertical wall, extending obliquely upwardly from said garbage outlet (30).

13. A unit as claimed in claim 12, wherein said garbage container (30) includes a further inclined wall (73) disposed on the opposite side of said vertical wall (74) to said first-mentioned inclined wall (72) and inclined to the vertical in the opposite sense relative to said first-mentioned inclined wall, said inclined walls defining with said vertical wall adjacent garbage spaces sharing a common outlet (30) disposed beneath the base portion of said vertical wall (74).

14. A unit as claimed in any one of claims 1 to 4, further comprising:
garbage detection means (90) for detecting a presence/absence of garbage in said garbage container (20), and
control means for terminating a sucking operation in response to an absence of garbage being detected by said garbage detection means.

15. A unit as claimed in claim 14, wherein
said garbage detection means includes an optical sensor (90) arranged on an upper portion of said garbage container (20) for projecting light toward said garbage outlet (30).

16. A unit as claimed in claim 14 or claim 15, further comprising:
an inlet passageway (87) having a lower end connected to said upper inlet (86), and
an inlet gate (88) for opening/closing the inlet passageway (87),
said control means being operable to:
bring said inlet gate (88) into a closed position at the start of said sucking operation, and to
bring said inlet gate (88) into an open position at the termination of said sucking operation.

17. A unit as claimed in any one of claims 14 to 16, wherein
said air inlet comprises:
a first intake (80) connected to said garbage container (20) in the vicinity of said garbage outlet (30),
a second intake (81) connected to said garbage container (20) at a position upwardly separated from said first intake,
a first valve (82) for opening/closing said first intake (80), and
a second valve (83) for opening/closing said second intake (81).

18. A unit as claimed in claim 17, wherein
the control means is arranged to bring said first valve (82) into an open position and said second valve (83) thereafter into an open position at the start of a sucking operation, and to bring said second valve (83) first into a closed position and said first valve (82) thereafter into a closed position in termination of said sucking operation.

19. A unit as claimed in any one of claims 16 to 18, wherein
a plurality of garbage containers (20) are connected to said garbage transfer passageway (25), and said control means is arranged to bring all said inlet gates (88) into closed positions at the start of a sucking operation, and to bring all said inlet gates (88) into open positions at the termination of said sucking operation.

20. A unit as claimed in any one of claims 1 to 4, wherein
said air inlet (101) is arranged to direct air upwardly from a lower portion of said garbage container (20).

21. A unit as claimed in claim 20, wherein
said air inlet comprises an air intake (101) extending obliquely upwardly so that its upper end portion is connected to said garbage container (20).

22. A unit as claimed in claim 20 or claim 21, wherein
an opening (121) of said air intake (120) is vertically elongated.

23. A unit as claimed in any one of claims 20 to 22, wherein
said air intake (120) has a plurality of vertically arranged openings (123).

24. A unit as claimed in any one of claims 20 to 23, wherein
said air intake (120) has an opening (121) which is provided with a garbage entrance inhibitor (103) for inhibiting garbage from entering said air intake (120).

25. A unit as claimed in claim 24, wherein
a surface of said garbage entrance inhibitor (103) is arranged to be flush with an inner wall surface of said garbage container (20).

## Patentansprüche

1. Abfallbeseitigungsanlage mit einem Abfallbehälter (20), der eine obere Einlaßöffnung (29), durch die Abfall in den Behälter fallen kann, und eine untere Auslaßöffnung (30), durch die Abfall mittels Absaugen durch eine Überführungsleitung (25) entfernt werden kann, und eine Luftzuführung (26), durch die während der Abfallentfernung Luft in den Behälter eintreten kann, aufweist, dadurch **gekennzeichnet**, daß zumindest ein Teil der Luftzuführung (26) benachbart zur Auslaßöffnung (30) angeordnet ist, und daß eine Umgehungsleitung (28) mit einer Zugangsöffnung zu dem Behälter an einer Stelle oberhalb der Lage der Luftzuführung (26) eingerichtet ist, die mit der Abfallüberführungsleitung (25) in Verbindung steht.

2. Vorrichtung nach Anspruch 1, gekennzeichnet durch eine Kopplungsstation (24) zur Aufnahme eines Absaugrohrs eines Müllwagens (21) mit einer Vakuum-Sauganlage (22) und einem Absaugrohr (23), wobei mittels der Kopplungsstation das Absaugrohr mit der Abfallüberführungsleitung (25) verbunden werden kann.

3. Vorrichtung nach Anspruch 1 oder 2, dadurch gekennzeichnet, daß der untere Abschnitt des Abfallbehälters (20) zur Auslaßöffnung (30) hin zuläuft.

4. Vorrichtung nach einem der vorhergehenden Ansprüche, gekennzeichnet durch eine Ventileinrichtung (27) zum Öffnen oder Schließen der Leitung der Luftzuführung (26).

5. Vorrichtung nach einem der vorhergehenden Ansprüche, gekennzeichnet durch eine Ventileinrichtung (50) zum Öffnen oder Schließen der Luft-Umgehungsleitung (28).

6. Vorrichtung nach Anspruch 5, wobei die Ventileinrichtung (50) für die Umgehungsleitung eine Druckmeßeinheit (A) zur Messung des Druckes in der Abfallüberführungsleitung (25), eine bewegliche Klappe (51) in der Umgehungsleitung (28), die in eine offene Position und in eine geschlossene Position zum Öffnen bzw. Schließen der Luftleitung gebracht werden kann, und Antriebsmittel (54) für diese Klappe aufweist, um die bewegliche Klappe auf einen von der Druckmeßeinheit (A) festgestellten Druckabfall unter einen vorgegebenen Wert hin in die offene Position zu bringen.

7. Vorrichtung nach einem der Ansprüche 1 bis 4, dadurch gekennzeichnet, daß die Luftzuführung einen ersten Einlaß (61), der mit dem Abfallbehälter (20) in der Nähe der Abfallauslaßöffnung (30) verbunden ist, und einen zweiten Einlaß (62) aufweist, der mit dem Abfallbehälter (20) an einer höheren Stelle und getrennt von dem ersten Einlaß verbunden ist.

8. Vorrichtung nach Anspruch 7 mit
einem ersten Ventil (V1) zum Öffnen oder Schließen der Luftleitung des ersten Einlasses (61),
einem zweiten Ventil (V2) zum Öffnen oder Schließen der Luftleitung des zweiten Einlasses (62),
einem ersten Druckmeßgerät (P1) zur Messung des Innendrucks im Bereich der Verbindungsstelle zwischen dem ersten Einlaß (61) und dem Abfallbehälter (20),
einem zweiten Druckmeßgerät (P2) zur Messung des Innendrucks im Bereich der Verbindungsstelle zwischen dem zweiten Einlaß (62) und dem Abfallbehälter (20), einem dritten Druckmeßgerät (PD) zur Messung des Druckes in der Abfallüberführungsleitung (25) und mit
einer Regeleinrichtung zur Steuerung der Vorgänge des Öffnens und Schließens des ersten und zweiten Ventils auf der Grundlage der von den jeweiligen Druckmeßgeräten gelieferten Informationen.

9. Vorrichtung nach Anspruch 8, wobei die Regeleinrichtung die Vorgänge nach folgenden Kriterien steuert:
das erste und zweite Ventil (V1, V2) werden in eine offene bzw. geschlossene Stellung zu Beginn des Absaugvorgangs gebracht,
das erste und zweite Ventil (V1, V2) werden in eine geschlossene bzw. offene Stellung gebracht, wenn die Differenz zwischen den vom ersten und dritten Druckmeßgerät (P1, PD) gemessenen Druckwerten unter einen vorbestimmten Wert fällt, und
der Absaugvorgang wird beendet, wenn die Differenz der von dem zweiten und dritten Druckmeßgerät (P2, PD) gemessenen Druckwerte unter einen vorbestimmten Wert fällt.

10. Vorrichtung nach einem der Ansprüche 1 bis 4, wobei die Luftzuführung ein Stammrohr (65, 69) aufweist mit einem ersten Zweigrohr (66, 70), das von dem Stammrohr abzweigt und mit dem Abfallbehälter (20) in Nähe der Auslaßöffnung (30) verbunden ist, und mit einem zweiten Zweigrohr (67; 71), das von dem Stammrohr (65) abzweigt und mit dem Abfallbehälter (20) an einer Stelle oberhalb und getrennt von dem ersten Zweigrohr (66) verbunden ist.

11. Vorrichtung nach Anspruch 10 soweit rückbezogen auf Anspruch 4, dadurch gekennzeichnet, daß die Ventileinrichtung ein Ventil (V) zum Öffnen oder Schließen der Luftleitung des Stammrohres (65; 69) aufweist.

12. Vorrichtung nach einem der vorhergehenden Ansprüche, dadurch gekennzeichnet, daß der Abfallbehälter eine Wand (74), die sich im wesentlichen vertikal, von der Auslaßöffnung (30) nach oben verlaufend erstreckt, und eine geneigte Wand (72) aufweist, die gegenüber der vertikalen Wand liegt und sich ausgehend von der Auslaßöffnung (30) schräg nach oben erstreckt.

13. Vorrichtung nach Anspruch 12, dadurch gekennzeichnet, daß der Abfallbehälter (30) eine weitere geneigte Wand (73) aufweist, die auf der gegenüberliegenden Seite der vertikalen Wand (74) und der ersten geneigten Wand (72) angeordnet ist, und die bezogen auf die erste geneigte Wand entgegengesetzt zur Vertikalen geneigt ist, wobei die geneigten Wände zusammen mit der vertikalen Wand benachbarte Abfallräume bilden, die eine gemeinsame Auslaßöffnung (30) unterhalb des Sockels der vertikalen Wand (74) aufweisen.

14. Vorrichtung nach einem der Ansprüche 1 bis 4, gekennzeichnet durch
eine Abfallerfassungseinheit (90) zur Feststellung, ob Abfall im Abfallbehälter (20) vorhanden ist, und
eine Regeleinrichtung zur Beendigung des Absaugvorgangs, wenn von der Abfallerfassungseinheit festgestellt wird, daß kein Abfall vorhanden ist.

15. Vorrichtung nach Anspruch 14, wobei die Abfallerfassungseinrichtung einen optischen Sensor (90) enthält, der in einem oberen Abschnitt des Abfallbehälters (20) angeordnet ist und Licht in Richtung der Auslaßöffnung (30) aussendet.

16. Vorrichtung nach einem der Ansprüche 14 oder 15, gekennzeichnet durch
eine Zuführleitung (87) mit einem an die obere Zuführöffnung (86) angeschlossenen unteren Ende,
einen Schieber (88) zum Öffnen oder Schließen der Zuführleitung (87),
wobei die Regeleinrichtung den Schieber (88) zu Beginn des Absaugvorgangs in eine geschlossene Position und bei Beendigung des Absaugvorgangs in eine offene Position bringt.

17. Vorrichtung nach einem der Ansprüche 14 bis 16, dadurch gekennzeichnet, daß die Luftzuführung einen ersten Einlaß (80) aufweist, der an den Abfallbehälter (20) in Nähe der Auslaßöffnung (30) angeschlossen ist, weiterhin einen zweiten Einlaß (81), der an den Abfallbehälter (20) an einer Stelle oberhalb und getrennt von dem ersten Einlaß angeschlossen ist,
ein erstes Absperrorgan (82) zum Öffnen oder Schließen des ersten Einlasses (80) und ein zweites Absperrorgan (83) zum Öffnung oder Schließen des zweiten Einlasses (81).

18. Vorrichtung nach Anspruch 17, dadurch gekennzeichnet, daß die Regeleinrichtung zu Beginn des Absaugvorgangs das erste Absperrorgan (82) und anschließend das zweite Absperrorgan (83) in eine offene Stellung bringt und zum Abschluß des Absaugvorgangs zunächst das zweite Absperrorgan (83) und anschließend das erste Absperrorgan (82) in eine geschlossene Stellung bringt.

19. Vorrichtung nach einem der Ansprüche 16 bis 18, dadurch gekennzeichnet, daß mehrere Abfallbehälter (20) an die Abfallüberführungsleitung (25) angeschlossen sind, und daß die Regeleinrichtung alle Einlaßschieber (88) bei Beginn des Absaugvorgangs in eine geschlossene und zum Abschluß des Absaugvorgangs in eine offene Stellung bringt.

20. Vorrichtung nach einem der Ansprüche 1 bis 4, dadurch gekennzeichnet, daß die Luftzuführung (101) Luft von einem unteren Abschnitt des Abfallbehälters (20) nach oben führt.

21. Vorrichtung nach Anspruch 20, dadurch gekennzeichnet, daß die Luftzuführung einen Lufteinlaß (101) aufweist, der sich derart schräg nach oben erstreckt, daß sein oberes Ende mit dem Abfallbehälter (20) verbunden ist.

22. Vorrichtung nach Anspruch 20 oder 21, dadurch gekennzeichnet, daß eine Öffnung (121) des Lufteinlasses (120) in vertikaler Richtung langgestreckt ist.

23. Vorrichtung nach einem der Ansprüche 20 bis 22, dadurch gekennzeichnet, daß der Lufteinlaß (120) mehrere in vertikaler Richtung angeordnete Öffnungen (123) aufweist.

24. Vorrichtung nach einem der Ansprüche 20 bis 23, dadurch gekennzeichnet, daß der Lufteinlaß (120) eine Öffnung (121) mit einer Absperrung (103) aufweist, um den Eintritt von Abfall in den Lufteinlaß (120) zu vermeiden.

25. Vorrichtung nach Anspruch 24, dadurch gekennzeichnet, daß eine Oberfläche der Absperrung (103) gegen den Eintritt von Abfall, fluchtend mit einer Innenwand des Abfallbehälters (20) angeordnet ist.

## Revendications

1. Dispositif pour l'évacuation de déchets, dans lequel il est prévu un conteneur à déchets (20) présentant uns entrée supérieure (29) par laquelle on laisse tomber les déchets dans le conteneur, une sortie inférieure (30) par laquelle les déchets peuvent être prélevés du conteneur par aspiration par l'intermédiaire d'une voie de passage de transfert de déchets (25) et une entrée d'air (26) à travers laquelle on peut faire pénétrer des l'air dans le conteneur pendant l'évacuation dos déchets, caractérisé an ce qu'au moins une partie de l'entrée d'air (26) est située à proximité de la sortie (30) et le dispositif est caractérisé de plus par des moyens définissant une voie de passage de dérivation (28) avec une ouverture dans le conteneur en une position située au-dessus du niveau de l'entrée d'air (26) et communiquant avec la voie de passage de transfert de déchets (25).

2. Dispositif selon la revendication 1, comprenant un poste de raccordement (24) destiné à recevoir une conduite d'aspiration d'un camion à ordures (21) comportant une unité d'aspiration sous vide (22) et une conduite d'aspiration (23) et pour raccorder la conduite d'aspiration à la voie de passage de transfert de déchets (25).

3. Dispositif selon la revendication 1 ou la revendication 2, dans lequel une portion inférieure du conteneur de déchets (20) converge en direction de la sortie (30).

4. Dispositif selon l'une quelconque des revendications précédentes, comprenant de plus des moyens de soupape d'entrée (27) pour ouvrir/fermer un passage d'air de l'entrée d'air (26).

5. Dispositif selon l'une quelconque des revendications précédentes, comprenant de plus des moyens de soupape de dérivation (30) pour ouvrir/fermer Un passage d'air de la vois de passage de dérivation (28).

6. Dispositif selon la revendication 5, dans lequel les moyens de soupape de dérivation (50) comprennent :
des moyens de détection de pression (A) pour détecter la pression dans la voie de passage de transfert de déchets (25),
un élément de soupape mobile (51) agencé dans la voie de passage de dérivation (28) et qui est mobile entre une position ouverte pour l'ouverture du passage d'air et une position fermée pour la fermeture du passage d'air, et
des moyens d'entraînement de l'élément de soupape (54) pour amener l'élément de soupape mobile dans la position ouverte on réponse à la réduction de pression détectée par les moyens de détection de pression (A) au-dessous d'une valeur prédéterminée.

7. Dispositif selon l'une quelconque des revendications 1 à 4, dans lequel
l'entrée d'air comprend :
une première admission (61) raccordée au conteneur de déchets (20) à proximité de la sortie de déchets (30), et
une seconde admission (62) raccordée au conteneur de déchets (20) en une position vers le haut séparée de la première admission.

8. Dispositif selon la revendication 7, comprenant de plus :
une première soupape (V1) pour ouvrir/fermer un passage d'air de la première admission (61),
une seconde soupape (V2) pour ouvrir/fermer un passage d'air de la seconde admission (62),
un premier détecteur de pression (P1) pour détecter une pression interne autour d'une portion raccordée entre la première admission (61) et le conteneur de déchets (20),
un second détecteur de pression (P2) pour détecter une pression interne autour d'une portion raccordée entre la seconde admission (62) et la conteneur de déchets (20),
un troisième détecteur de pression (PD) pour détecter la pression dans la voie de passage de transfert de déchets (25), et
des moyens de commande pour commander les opérations d'ouverture/fermeture des première et seconde soupapes en fonction des informations détectées par les détecteurs de pression respectifs.

9. Dispositif selon la revendication 8, dans lequel
les moyens de commande sont opérants pour commander les opérations consistant à :
amener les première et seconde soupapes (V1, V2) sur les positions ouverte et fermée respectivement au début d'une opération d'aspiration,
amener les première et seconde soupapes (V1, V2) sur les positions fermée et ouverte respectivement lorsque la différence entre les valeurs de pression détectées par les premier et troisième détecteurs de pression (P1, PD) est réduite au-dessous d'une valeur prédéterminée, et
achever l'opération d'aspiration lorsque la différence entre les valeurs de pression détectées par les second et troisième détecteurs de pression (P2, PD) est réduite au-dessous d'une valeur prédéterminée.

10. Dispositif selon l'une quelconque des revendications 1 à 4, dans lequel l'entrée d'air comprend :
une conduite principale (65, 69),
une première conduite d'embranchement (66, 70) partant de la conduite principale et qui est raccordée au conteneur de déchets (20) à proximité de la sortie de déchets (30), et
une seconde conduits d'embranchement (67 ; 71) partant de la conduite principale (65) et qui est raccordée au conteneur de déchets (20) en une position vers le haut séparée de la première conduite d'embranchement (66).

11. Dispositif selon la revendication 10, lorsqu'elle est dépendante de la revendication 4, dans lequel les moyens de soupape d'entrée comprennent une soupape (V) pour ouvrir/fermer un passage d'air de la conduite principale (65 ; 69).

12. Dispositif selon l'une quelconque des revendications précédentes, dans lequel
le conteneur de déchets comprend :
une paroi (74) s'étendant sensiblement verticalement vers la haut à partir de la sortie de déchets (30), et
une paroi inclinée (72), opposée à la paroi verticale, s'étendant de façon oblique vers le haut à partir de la sortie de déchets (30).

13. Dispositif selon la revendication 12, dans lequel le conteneur de déchets (30) comprend une autre paroi inclinée (73) disposée sur le côté opposé de la paroi verticale (74) par rapport à la paroi inclinée mentionnée en premier (72) et inclinée par rapport à la verticale dans le sens opposé par rapport à la paroi inclinée mentionnée en premier, les parois inclinées définissant la paroi verticale contigue aux espaces de déchets partageant une sortie commune (30) disposée au-dessous de la portion de base de la paroi verticale (74).

14. Dispositif selon lune quelconque des revendications 1 à 4, comprenant de plus :
des moyens de détection de déchets (90) pour détecter la présence/absence de déchets dans le conteneur de déchets (20), et
des moyens de commande pour achever l'opération d'aspiration en réponse à une absence de déchets détectée par les moyens de détection de déchets.

15. Dispositif selon la revendication 14, dans lequel les moyens de détection de déchets comprennent un capteur optique (90) disposé sur une portion supérieure du conteneur de déchets (20) pour projeter une lumière en direction de la sortie de déchets (30).

16. Dispositif selon la revendication 14 ou la revendication 15, comprenant de plus :
une voie de passage d'entrée (87) avec une extrémité inférieure raccordée à l'entrée supérieure (86), et
une porte d'entrée (88) pour ouvrir/fermer la voie de passage d'entrée (87),
les moyens de commande étant opérants pour réaliser les opérations suivantes :
amener la porte d'entrée (88) sur une position fermée au départ de l'opération d'aspiration, et
amener la porte d'entrée (88) sur une position ouverte à la fin de l'opération d'aspiration.

17. Dispositif selon l'une quelconque des revendications 14 à 16, dans lequel l'entrée d'air comprend :
une première admission (80) raccordée au conteneur de déchets (20) à proximité de la sortie de déchets (30),
une seconde admission (81) raccordée au conteneur de déchets (20) en une position vers le haut séparée de la première admission,
une première soupape (82) pour ouvrir/fermer la première entrée (80), et
une seconde soupape (83) pour ouvrir/fermer la seconde entrée (81).

18. Dispositif selon la revendication 17, dans lequel les moyens de commande sont aptes à mettre la première soupape (82) en position ouverte et la seconde soupape (83) ensuite sur une position ouverte au début d'une opération d'aspiration et amener la seconde soupape (83) d'abord sur une position fermée et la première soupape (82) ensuite sur une position fermée à la fin de l'opération d'aspiration.

19. Dispositif selon l'une quelconque des revendications 16 à 18, dans lequel
une pluralité de conteneurs de déchets (20) est raccordée à la voie de passage de transfert de déchets (25) et les moyens de commande sont aptes à amener toutes les portes d'entrée (88) sur les positions fermées au départ d'une opération d'aspiration et d'amener les portes d'entrée (88) sur les positions ouvertes à la fin de l'opération d'aspiration.

20. Dispositif selon l'une quelconque des revendications 1 à 4, dans lequel
l'entrée d'air (101) est apte à diriger l'air vers le haut à partir d'une portion inférieure du conteneur de déchets (20).

21. Dispositif selon la revendication 20, dans lequel
l'entrée d'air comprend une entrée d'air (101) s'étendant de façon oblique vers le haut de sorte que sa portion d'extrémité supérieure est raccordée au conteneur de déchets (20).

22. Dispositif selon la revendication 20 ou la revendication 21, dans lequel
l'ouverture (121) de l'entrée d'air (120) est allongée verticalement.

23. Dispositif selon l'une quelconque des revendications 20 à 22, dans lequel
l'entrée d'air (120) comporte plusieurs ouvertures disposées verticalement (123).

24. Dispositif selon l'une quelconque des revendications 20 à 23, dans lequel
l'entrée d'air (120) a une ouverture (121) qui est munie d'un inhibiteur d'entrée de déchets (103) pour empêcher les déchets de pénétrer dans l'entrée d'air (120).

25. Dispositif selon la revendication 24, dans lequel
une surface de l'inhibiteur d'entrée de déchets (103) est agencé en affleurement avec une surface de paroi interne du conteneur de déchets (20).
